Europäisches Patentamt

European Patent Office

Office européen des brevets

(19)

(11) Numéro de publication: **0 120 791**

**A1**

(12) **DEMANDE DE BREVET EUROPEEN**

(21) Numéro de dépôt: **84400608.0**

(22) Date de dépôt: **27.03.84**

(51) Int. Cl.³: **F 16 L 33/02**
**F 01 N 7/08**

(30) Priorité: **29.03.83 FR 8305148**

(43) Date de publication de la demande:
**03.10.84 Bulletin 84/40**

(84) Etats contractants désignés:
**BE DE GB IT NL SE**

(71) Demandeur: **Etablissements CAILLAU S.A.R.L.**
**28, rue Ernest Renan**
**F-92130 Issy-les-Moulineaux(FR)**

(72) Inventeur: **Calmettes, Lionel**
**3, rue des Glycines**
**F-77330 Ozoir-la-Ferriere(FR)**

(74) Mandataire: **Descourtieux, Philippe et al,**
**CABINET BEAU de LOMENIE 55 rue d'Amsterdam**
**F-75008 Paris(FR)**

(54) **Collier de serrage, en particulier pour tuyaux d'échappement de moteurs pour véhicules automobiles.**

(57) Collier de serrage, notamment pour la fixation de deux tubes (3-9) métalliques emmanchés l'un dans l'autre, tels que des éléments de tuyau d'échappement de véhicules automobiles, ledit collier comportant une zone susceptible de subir une déformation permanente au moment du serrage pour diminuer la longueur de la périphérie intérieure du collier. La zone déformable est constituée par une surface plane (4) s'étendant radialement dans le plan du collier à partir de la périphérie interne de celui-ci.

Fig. 2

EP 0 120 791 A1

0120791

1

<u>Collier de serrage, en particulier pour tuyaux d'échappement de</u>
<u>moteurs pour véhicules automobiles.</u>

La fixation l'un par rapport à l'autre de deux tubes métalliques emmanchés l'un dans l'autre présente, ainsi qu'on le sait, diverses difficultés. En général, et plus particulièrement dans le cas du raccordement des éléments constitutifs du tuyau d'échappement d'un moteur pour véhicule automobile, le tube extérieur est fendu sur une certaine longueur nécessairement inférieure à la longueur d'emmanchement des deux tubes.

Pour assurer la fixation des deux tubes on utilise divers types de colliers de serrage disposés, en principe, à peu près au milieu de la longueur d'emmanchement.

Les colliers connus, utilisés pour ce genre d'application, nécessitent cependant, après leur positionnement sur le tube à serrer, l'emploi d'organes de serrage tels que vis, boulons, écrous qu'il convient tout d'abord de mettre en place dans les logements prévus à cet effet puis de serrer de façon convenable. Ainsi le nombre de pièces à fabriquer peut être relativement important, d'autre part le serrage des deux tubes est fréquemment insuffisant ou incertain et enfin le temps de montage est souvent assez long.

Des colliers du type qui vient d'être rappelé sont décrits notamment dans le brevet FR-A n° 2 491 163.

On connaît également, par exemple par le brevet US-A n° 3602954 des colliers constitués par une bande métallique fermée et sur elle-même et présentant une zone susceptible de subir une déformation permanente. Bien que de tels colliers ne soient pas en général utilisés pour le montage de tubes rigides, en raison notamment de la faible épaisseur de la bande métallique, il est apparu intéressant de signaler cette technique antérieure.

La présente invention a donc pour objet un collier de serrage, en particulier pour la fixation de deux tubes métalliques emmanchés l'un dans l'autre, un tel collier comportant une zone susceptible de subir une déformation permanente au moment du serrage, c'est-à-dire au moment où il est nécessaire de diminuer la longueur de sa périphérie interne.

Selon l'invention la zone déformable du collier est constituée par une surface plane s'étendant radialement dans le plan du collier.

Grâce à cette disposition on peut mettre en oeuvre un procédé de serrage qui fait également partie de l'invention, selon lequel on crée des ondulations radiales dans la zone déformable de façon à provoquer une diminution de la longueur de la périphérie interne du collier.

Dans un mode de réalisation très avantageux, le collier est constitué par un anneau plan, de préférence découpé dans un flan de tôle, la zone déformable présentant des dimensions radiales au moins égales, et de préférence sensiblement supérieures à celles de la partie courante de l'anneau.

L'invention peut également être appliquée sur différents types connus de colliers et notamment sur ceux décrits dans le brevet FR-A 2491163, c'est-à-dire sur des colliers en deux parties, destinés en particulier à constituer des pièces de rechange. De tels colliers comportent un étrier en forme de cavalier à branches divergentes dont les extrémités sont munies de butées coopérant avec une bride. La partie médiane de cette dernière présente une forme incurvée qui correspond à celle du tube à enserrer. Dans ce type de collier l'invention sera avantageusement mise en oeuvre en réalisant le cavalier sous forme d'un élément de tôle plane partiellement annulaire, la zone déformable du collier étant prévue sur ce cavalier et présentant des dimensions radiales au moins égales et de préférence supérieures à celles de la partie courante de la portion annulaire.

L'invention sera mieux comprise et ses avantages ainsi que diverses autres caractéristiques apparaîtront au cours de la description qui va suivre de quelques modes de réalisation en référence aux dessins annexés dans lesquels :

- la figure 1 est une vue en plan d'un collier selon l'invention;

- la figure 2 est une vue du collier de la figure 1 monté sur le tube à serrer;

- la figure 3 est une vue en coupe selon III-III de la figure 1 d'une variante de réalisation du collier;

- la figure 4 est une vue en plan d'un collier selon l'invention en deux parties destiné notamment à constituer une pièce de rechange;

- la figure 5 est une vue schématique des mâchoires d'un outil permettant la mise en oeuvre du procédé de serrage selon l'invention.

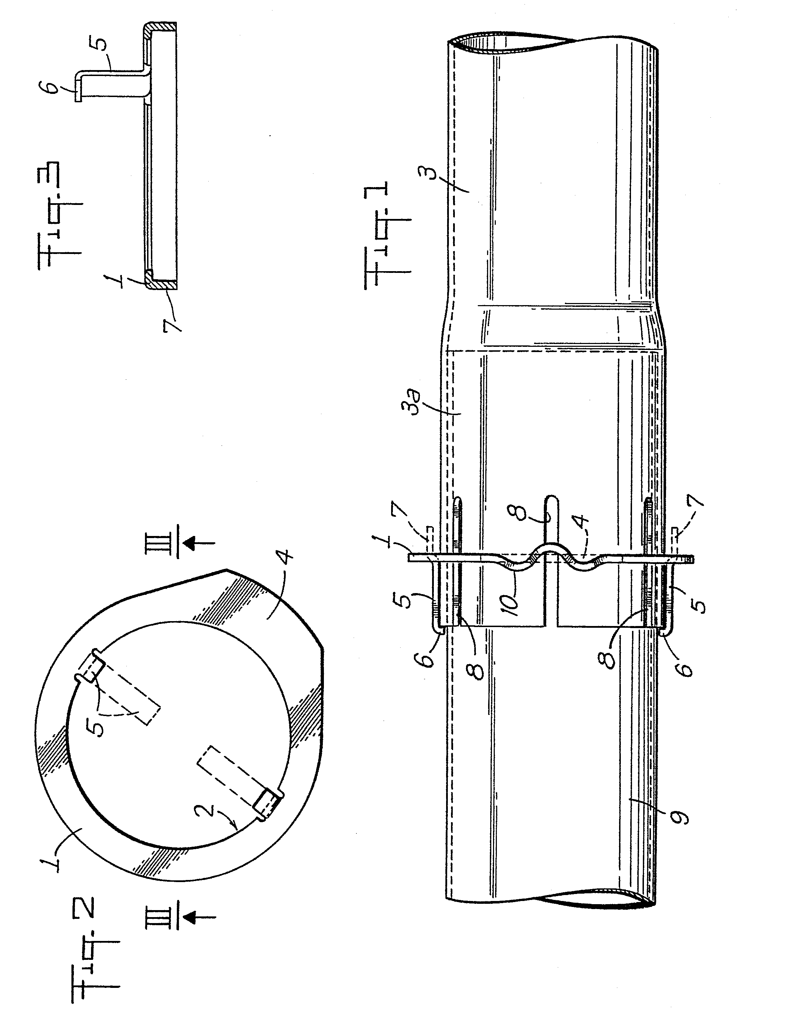

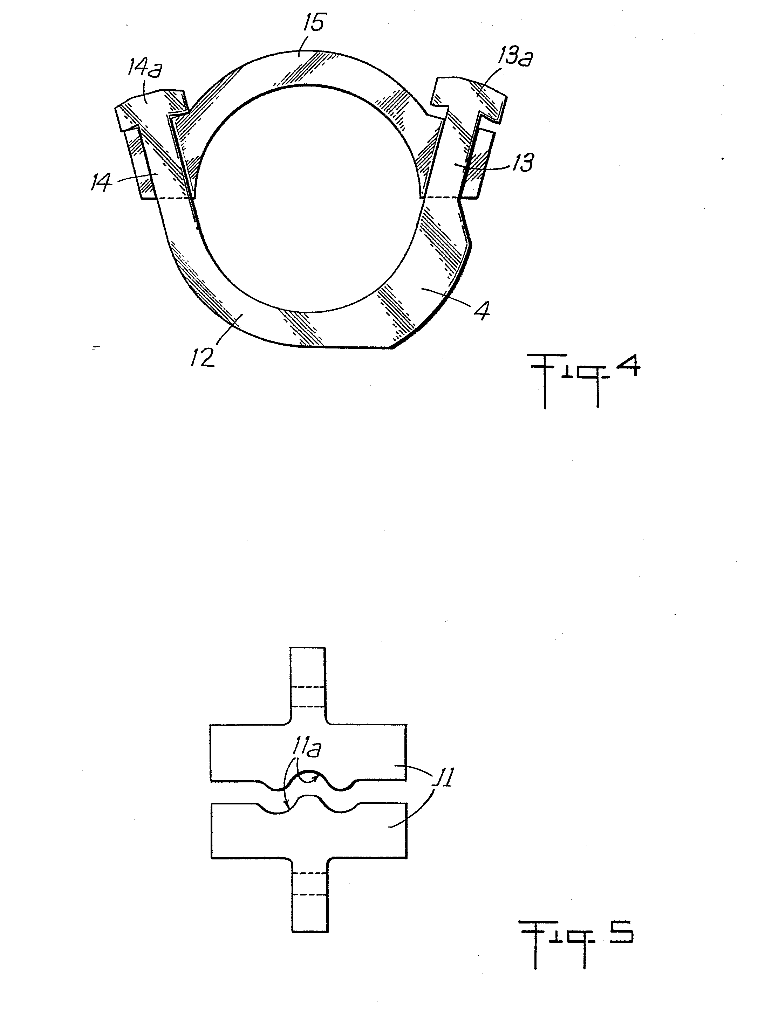

Si l'on se reporte tout d'abord à la figure 1 et à la figure 2 on voit que le collier est constitué par un simple anneau plat 1 découpé dans un flan de tôle. La périphérie interne 2 du collier présente un diamètre légèrement supérieur à celui du tube 3 sur lequel il doit être monté. Dans sa partie courante, l'anneau 1 présente une dimension radiale sensiblement constante mais une zone 4 s'étend radialement, de préférence, au-delà de la partie courante vers l'extérieur et se raccorde de façon convenable à cette dernière. La zone 4 est susceptible d'être déformée de façon permanente dans des conditions que l'on précisera plus loin, mais il faut noter ici qu'elle est obtenue directement au moment du découpage du flan de tôle et qu'elle possède en principe la même épaisseur que le reste du collier.

D'autre part, le découpage de l'anneau laissera de préférence des pattes 5 attachées à la périphérie interne. Ces pattes sont représentées en trait ponctué sur la figure 1 car elles sont destinées, immédiatement après le découpage du flan de tôle à être pliées perpendiculairement au plan du collier et à recevoir un autre pli à leur extrémité libre pour constituer un crochet 6 dirigé vers l'axe du collier (figure 2).

Pour diminuer quelque peu l'encombrement du collier il peut être avantageux de réaliser un bord tombé (7) sur sa périphérie externe ainsi qu'on le voit sur la figure 3. Cette disposition ne nuit évidemment pas à la résistance du collier mais il est essentiel de limiter ce bord tombé sensiblement à la partie courante de l'anneau, à l'exclusion de la périphérie externe de la zone déformable 4.

La fabrication du collier est particulièrement simple et ne nécessite, comme on l'a vu, qu'une opération de découpage suivie éventuellement d'opérations de pliage.

Le montage et le serrage d'un collier sont également très faciles et rapides. Le collier est tout d'abord enfilé sur le tube 3 à serrer jusqu'à ce que ses crochets 6 viennent en butée sur l'extrémité du tube. Sa position est alors tout à fait satisfaisante puisque la longueur des pattes 5 correspondra à peu près à la moitié de la longueur des fentes 8 ménagées à l'extrémité du tube 3. Un deuxième tube 9 est ensuite emmanché dans le tube 3 jusqu'à venir en butée dans le renflement terminal (3a) généralement prévu sur celui-ci. Les fentes 8 sont alors obturées par le tube 9.

Le serrage du collier est obtenu en créant, par une déformation permanente, des ondulations radiales 10 dans la zone déformable 4 ce qui a pour effet de diminuer la périphérie interne de l'anneau et de presser fortement le tube 3 sur le tube 9.

Cette opération est réalisée de préférence au moyen d'une simple pince, par exemple à genouillère, dont les mâchoires 11 présentent la forme visible sur la figure 5. Les ondulations 11a des mâchoires feront apparaître des ondulations 10 correspondantes dans la zone déformable 4, visibles sur la figure 2.

Bien que l'invention ait été exposée dans son application à un collier en une seule pièce elle peut être avantageusement utilisée sur un collier en deux pièces. Sur la figure 4 on voit un tel collier comportant un cavalier 12 dont les branches divergentes 13 et 14 sont munies de butées 13a et 14a coopérant avec une bride 15. Cette dernière présente une partie médiane incurvée correspondant au diamètre du tube à serrer et deux logements recevant les branches divergentes du cavalier 12.

Le cavalier lui-même est d'une façon analogue à ce qui a été décrit plus haut découpé dans un flan de tôle et comporte la zone déformable 4 du collier. Il peut également être muni d'une ou plusieurs pattes analogues à celles décrites plus haut.

Le montage du collier ne nécessite plus ici l'accessibilité de l'extrémité du tube à serrer mais le serrage s'effectue de la façon décrite plus haut par la création d'ondulations radiales dans la zone déformable 4.

REVENDICATIONS

1.          Collier de serrage, notamment pour la fixation de deux tubes (3-9) métalliques emmanchés l'un dans l'autre, tels que des éléments de tuyau d'échappement de véhicules automobiles, ledit collier comportant une zone susceptible de subir une déformation permanente au moment du serrage pour diminuer la longueur de la périphérie intérieure du collier, caractérisé en ce que la zone déformable est constituée par une surface plane (4) s'étendant radialement dans le plan du collier à partir de la périphérie interne de celui-ci.

2.          Collier selon la revendication 1, caractérisé en ce qu'il est constitué par un anneau plan (1), de préférence découpé dans un flan de tôle, la zone déformable (4) présentant des dimensions radiales au moins égales, et de préférence sensiblement supérieures à celles de la partie courante de l'anneau.

3.          Collier selon la revendication 1, utilisable notamment à titre de pièce de rechange, comportant un étrier en forme de cavalier (12) à branches (13-14) divergentes, dont les extrémités munies de butées (13a-14a) coopèrent avec une bride (15), la partie médiane, de forme incurvée de ladite bride correspondant à celle du tube à enserrer, caractérisé en ce que le cavalier (12) est constitué par un élément de tôle plane, comportant une portion partiellement annulaire, la zone déformable (4) du collier étant prévue sur ce cavalier et présentant des dimensions radiales au moins égales et de préférence sensiblement supérieures à celles de la partie courante de la portion annulaire.

4.          Collier selon l'une quelconque des revendications 2 et 3, caractérisé en ce que la zone annulaire est munie, sur sa périphérie interne (2), d'au moins une patte (5) s'étendant perpendiculairement au plan de ladite zone annulaire, ladite patte présentant à son extrémité libre un crochet (6) susceptible de coopérer avec l'extrémité du tube (3) à serrer.

5.          Collier selon l'une quelconque des revendications 2 à 4, caractérisé en ce qu'un bord tombé (7), perpendiculaire au plan du collier s'étend sur au moins une partie et de préférence

6

sur la majeure partie de la périphérie externe de la zone annulaire du collier, à l'exclusion de la périphérie externe de sa zone déformable (4).

6. Procédé pour le serrage d'un collier selon l'une quelconque des revendications 1 à 5, caractérisé en ce qu'on crée des ondulations radiales (10) dans la zone déformable (4) de façon à diminuer la longueur de sa périphérie interne (2).

7. Dispositif pour la mise en oeuvre du procédé selon la revendication 6, caractérisé en ce qu'il comporte une pince à genouillère, dont les mâchoires (11) présentent sur leurs faces en regard, des ondulations (11a) complémentaires, correspondant à celles qui doivent être imprimées dans la zone déformable du collier.

Fig.2

Fig.3

Fig.1

1/2

0120791

0120791

Fig. 4

Fig. 5

# RAPPORT DE RECHERCHE EUROPEENNE

Office européen
des brevets

EP 84 40 0608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-1 775 916 (OETIKER)<br>* Revendication 1; figure 1 * | 1,6,7 | F 16 L 33/02<br>F 01 N 7/08 |
| A | DE-A-2 627 011 (VOLKSWAGENWERK)<br>* Figure 1; revendications * | 1,4,5 | |
| A | FR-A-2 435 624 (DONALDSON)<br>* Figure 6 * | 1-3 | |

DOMAINES TECHNIQUES
RECHERCHES (Int. Cl. ³)

F 16 L
F 01 N

Le présent rapport de recherche a été établi pour toutes les revendications

| Lieu de la recherche<br>LA HAYE | Date d'achèvement de la recherche<br>05-07-1984 | Examinateur<br>SCHAEFFLER C.A.A. |
|---|---|---|